(19) Europäisches Patentamt
European Patent Office
Office européen des brevets

(11) Veröffentlichungsnummer: **0 429 771 A2**

(12) # EUROPÄISCHE PATENTANMELDUNG

(21) Anmeldenummer: **90116610.8**

(51) Int. Cl.5: **C08G 69/32**

(22) Anmeldetag: **30.08.90**

(30) Priorität: **25.10.89 DE 3935468**

(43) Veröffentlichungstag der Anmeldung:
**05.06.91 Patentblatt 91/23**

(84) Benannte Vertragsstaaten:
**AT BE CH DE FR GB IT LI NL Patentblatt**

(71) Anmelder: **HÜLS AKTIENGESELLSCHAFT**
**Patentabteilung / PB 15 - Postfach 13 20**
**W-4370 Marl 1(DE)**

(72) Erfinder: **Poll, Günter, Dr.**
**Venusweg 9**
**W-4370 Marl(DE)**
Erfinder: **Bartmann, Martin, Dr.**
**Elper Weg 64**
**W-4350 Recklinghausen(DE)**
Erfinder: **Finke, Jürgen, Dr.**
**Münsterlandstrasse 22**
**W-4370 Marl(DE)**

(54) **Formmassen bestehend aus einem thermoplastisch verarbeitbaren, aromatischen Polyamid.**

(57)
2.1 Es sollen aromatische Polyamide mit verbesserter Schmelzviskosität und erhöhter Hydrolysebeständigkeit zur Verfügung gestellt werden.
2.2 Dies wurde erreicht durch aromatische Polyamide, enthaltend die Reste nachstehender Ausgangsmonomeren:
A. HOOC - Ar - COOH
B. $H_2N$ - AR′ - $NH_2$
C. R′ - COOH
wobei die Komponente C. zu 0,01 bis 10 Mol.-% in dem Polyamid enthalten ist.
2.3 Mit Hilfe der Erfindung gelingt es, besser verarbeitbare Formmassen mit guten mechanischen Eigenschaften zur Verfügung zu stellen.

EP 0 429 771 A2

# FORMMASSEN BESTEHEND AUS EINEM THERMOPLASTISCH VERARBEITBAREN, AROMATISCHEN POLYAMID

Gegenstand der Erfindung sind Formmassen bestehend aus einem thermoplastisch verarbeitbaren, aromatischen Polyamid.

Aromatische Polyamide auf Basis von Diaminen der allgemeinen Formel

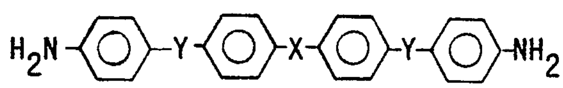

enthalten, sind bekannt (s. z. B. DE-OS 36 09 011). Die Schmelzviskosität dieser aromatischen Polyamide ist allerdings sehr hoch. Daher sind bei ihrer Herstellung und Verarbeitung sehr hohe Temperaturen erforderlich - im allgemeinen mindestens 350 °C. Bei diesen Temperaturen wird häufig eine Schädigung des Produkts beobachtet, erkennbar an Verfärbungen oder einer Verschlechterung der mechanischen Eigenschaften.

Aufgabe der Erfindung war es, Formmassen auf Basis aromatischer Polyamide zur Verfügung zu stellen, die die geschilderten Nachteile der Produkte des Standes der Technik nicht aufweisen.

Die Aufgabe wurde gelöst durch aromatische Polyamide enthaltend die Reste nachstehender Ausgangsmonomeren:

A. HOOC - Ar - COOH

B. $H_2N$ - Ar′ - $NH_2$

C. R′ - COOH

hierbei bedeutet

Ar: 1.3- oder 1.4-Phenylen; 1.4-, 1.5-, 2.6- oder 2.7-Naphthylen,

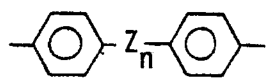

oder

Ar':

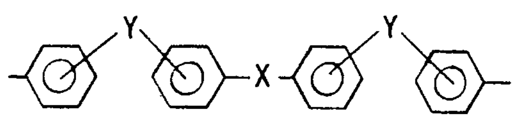 ;

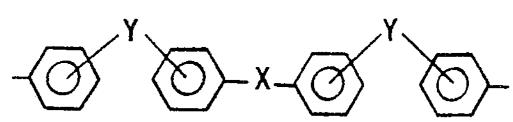 ;

X: $-SO_2-$; -CO-;

Y: -O-; -S-;

Z: -O-; -S-; $-SO_2-$; -CO-; $-CR_2-$;

R: -H; $C_1$ - $C_4$-Alkyl;

R' : 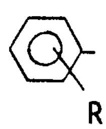 ; 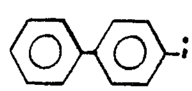; 1- bzw. 2-Naphthyl;

R″: -H; $C_1$ - $C_4$-Alkyl; Halogen;

n: 0; 1,

wobei die Komponente C. zu 0,01 bis 10 Mol.-% - bezogen auf die Summe der Komponenten A. und B. in dem Polyamid enthalten ist.

Die erfindungsgemäße Komponente C. stellt eine niedermolekulare, aromatische Monocarbonsäure dar, wobei der aromatische Rest durch Halogen oder $C_1$- bis $C_4$-Alkylreste substituiert sein kann.

Als aromatische Monocarbonsäure (Komponente C.) werden bevorzugt Benzoesäure, 1- oder 2-Naphthoesäure, Biphenyl-4-carbonsäure, substituierte Benzoesäuren oder Naphthoesäuren wie Tolylsäure, Brom-, Chlor-oder Fluorbenzoesäure oder Brom-, Chlor- oder Fluornaphthoesäure verwendet.

Anstelle der aromatischen Monocarbonsäuren können auch Bisamide eingesetzt werden, die aus den Komponente B. und C. erhalten werden.

Als aromatische Dicarbonsäuren (Komponente A.) werden Isophthalsäure, Terephthalsäure, 1.4-, 1.5-, 2.6-, 2.7-Naphthalindicarbonsäure, 4.4'-Diphenyletherdicarbonsäure oder 4.4'-Benzophenondicarbonsäure, 4.4'-Diphenylsulfondicarbonsäure, 2-Phenoxy-terephthalsäure, 4.4'-Biphenyldicarbonsäure oder Gemische davon eingesetzt.

Als aromatische Diamine (Komponente B.) kommen z. B. 4.4'-Bis(4-aminophenoxy)diphenylsulfon, 4.4'-Bis(3-aminophenoxy)diphenylsulfon, 4.4'-Bis(4-aminophenoxy)benzophenon, 4.4'-Bis(3-aminophenoxy)-benzophenon, 4.4'-Bis(p-aminophenylmercapto)benzophenon, 4.4'-Bis(p-aminophenylmercapto)-diphenylsulfon oder Gemische davon in Frage.

Bevorzugt eingesetzt werden Isophthalsäure; 4.4'-Bis(4-aminophenoxy)diphenylsulfon; Benzoesäure.

Die Polykondensation erfolgt in Gegenwart von Katalysatoren. Hierfür kommen Phosphor enthaltende Verbindungen wie Triphenylphosphit oder Säuren der allgemeinen Formel $H_3PO_m$ mit $m = 2$ bis 4 in Frage. Mit diesen Stoffen im Gemisch können auch Zinn(II)-Verbindungen, wie z. B. Zinn(II)-Salze organischer Carbonsäuren, eingesetzt werden.

Es ist auch bekannt, zusätzlich Cokatalysatoren, wie z. B. Dialkylaminopyridine zu verwenden.

Die Katalysatoren werden in Mengen von 0,05 bis 4 Mol.-%, vorzugsweise 0,1 bis 2 Mol.-% - bezogen auf die Summe der Komponenten A. und B. - verwendet.

Das molare Einsatzverhältnis der Komponenten A. und B. bewegt sich im Bereich von etwa 1 : 1. Die erfindungsgemäße Komponente C. ist zu 0,01 bis 10 Mol.-%, vorzugsweise 0,05 bis 8 Mol.-% - bezogen auf die Summe von A. und B. - in dem Polyamid enthalten.

Die Glastemperatur ($T_g$) der erfindungsgemäßen Polyamide liegt im Bereich von 190 bis 270 °C, die Viskositätszahlen (J-Werte) bei etwa 30 bis 90 $cm^3/g$; bevorzugt bei 60 bis 80 $cm^3/g$.

Die Herstellung der aromatischen Polyamide ist grundsätzlich bekannt und wird z. B. in DE-OS 36 09 011 beschrieben.

Die aromatische Monocarbonsäure wird bevorzugt gemeinsam mit den Monomeren eingesetzt. Es ist aber auch möglich, diese erst gegen Ende der Polykondensation nach Erreichen der gewünschten Viskositätszahl zuzusetzen.

Zur Erhöhung des Molekulargewichtes können die aromatischen Polyamide einer Festphasennachkondensation in einer Inertgasatmosphäre unterzogen werden.

Die Polyamide können auf üblichen Maschinen durch Spritzguß oder Extrusion zu den erfindungsgemäßen Formmassen verarbeitet werden.

Die Formmassen können zusätzlich noch Füllstoffe, wie Talkum oder Verstärkungsmittel, wie Glas-, ARAMID®- oder Kohlefasern, sowie andere übliche Zusätze, wie z. B. Pigmente oder Stabilisatoren, enthalten.

Die Formmassen werden nach üblichen Verfahren wie Spritzguß, Extrusion o. ä. zu Formteilen, Fasern, Folien usw. verarbeitet. Ebenso ist die Verwendung als Beschichtungsmittel ausgehend vom Pulver (z. B. Wirbelsinterverfahren), einer flüssigen Dispersion oder einer Lösung möglich.

Die erfindungsgemäßen Formmassen zeigen im Vergleich zu denen des Standes der Technik überraschend eine erheblich verbesserte Stabilität gegen thermischen Abbau bei der Verarbeitung. Zusätzlich ist es besonders vorteilhaft, daß aufgrund der reduzierten Schmelzviskosität der Polyamide die Verarbeitungstemperaturen gesenkt werden können. Die Verarbeitung der Polyamide erfolgt typischerweise bei Temperaturen im Bereich von 280 - 360 °C, bevorzugt 320 - 340 °C.

Die in der Beschreibung und in den Beispielen genannten Parameter wurden mit Hilfe nachstehender Verfahren bestimmt.

Die DSC-Untersuchungen zur Ermittlung der Glastemperatur ($T_g$) wurden an einem Perkin-Elmer-Calorimeter DSC-1B bei einer Aufheizgeschwindigkeit von 16 °K/min durchgeführt.

Die Viskositätszahlen (J) wurden an 0,5 Gew.-%igen Lösungen der Polymeren in einem Phenol/o-Dichlorbenzol-Gemisch (1 : 1 Gewichtsteile) bei 25 °C nach DIN 53 728 bestimmt.

Der Schmelzviskositätsindex (MVI-Wert) wurde an einem Göttfert-Viskosimeter bei 320 °C und 21,6 kg Last nach DIN 53 735-MFI-B gemessen.-

Mit Buchstaben gekennzeichnete Beispiele sind nicht erfindungsgemäß.-

Beispiele

Beispiel 1:

21,62 g (0:05 Mol) 4.4′-Bis(4-aminophenoxy)diphenylsulfon, 8,31 g (0,05 Mol) Isophthalsäure und 0,61 g (0,05 Mol) Benzoesäure wurden mit 155 mg (0,0005 Mol) Triphenylphosphit und 61 mg (0,0005 Mol) 4-N,N-Dimethylaminopyridin in einem Polykondensationsreaktor mit Rührer, Stickstoffeinleitung und Destillationsbrücke bei 250 °C aufgeschmolzen. Die Temperatur wurde nach 20 Minuten auf 300 °C erhöht. Dabei nahm die Viskosität der Schmelze stetig zu, während das im Verlauf der Reaktion freiwerdende Wasser abdestilliert wurde. Nach 10 Minuten wurde die Temperatur auf 320 °C erhöht und 60 Minuten dort gehalten.

Die Viskositätszahl (J) (Phenol/1,2-Dichlorbenzol, 0,5 Gew.-%) betrug 63 $cm^3/g$.

Der MVI-Wert lag bei 9,4 $cm^3/10$ min.

Beispiele 2 - 10 und Beispiel A

Die Beispiele 2 - 10 und das Beispiel A wurden analog Beispiel 1 durchgeführt. Die Zusammensetzungen dieser Polyamide sowie die Ergebnisse dieser Versuche sind in der Tabelle zusammengefaßt. Im Gegensatz zu den Beispielen 2 - 10 mußte Beispiel A nach 30 Min. bei 320 °C abgebrochen werden, weil die Reaktionsmischung infolge der hohen Schmelzviskosität nicht mehr gerührt werden konnte.

Tabelle

| Beispiel | BAPS 1) [Mol] | IPS 2) [Mol] | Komponente C. | [Mol] | Katalysator | [Mol.-%] | Cokatalysator | [Mol.-%] | J [cm³/g] | MVI-Wert [cm³/10 min] |
|---|---|---|---|---|---|---|---|---|---|---|
| 1 | 0,05 | 0,05 | BS 3) | 0.005 | $P(OPh)_3$ 9) | 1.0 | DMAP 10) | 1.0 | 63 | 9,4 |
| 2 | 0,05 | 0,045 | BS | 0.01 | $H_3PO_2$ | 1.0 | DMAP | 1.0 | 52 | 15,1 |
| 3 | 0,05 | 0,048 | BS | 0.01 | $H_3PO_3$ | 3.0 | DMAP | 3.0 | 57 | 12,6 |
| 4 | 0,05 | 0,047 | BS | 0.01 | $H_3PO_3$ | 1.4 | - | - | 54 | 13,9 |
| | | | | | SnOx 11) | 1.4 | | | | |
| 5 | 0,05 | 0,046 | BS | 0.015 | $P(OPh)_3$ | 1.4 | POPy 12) | 1.4 | 45 | 17,2 |
| 6 | 0,05 | 0,047 | 1-NaS 4) | 0.008 | $P(OPh)_3$ | 1.4 | DMAP | 1.4 | 66 | 8,7 |
| 7 | 0,05 | 0,047 | 2-NaS 5) | 0.008 | $P(OPh)_3$ | 1.4 | DMAP | 1.4 | 59 | 10,4 |
| 8 | 0,05 | 0,047 | Cl-BS 6) | 0.007 | $P(OPh)_3$ | 1.4 | DMAP | 1.4 | 68 | 7,1 |
| 9 | 0,05 | 0,047 | BiS 7) | 0.007 | $P(OPh)_3$ | 1.4 | DMAP | 1.4 | 65 | 8,7 |
| 10 | 0,05 | 0,05 | BBB 8) | 0.005 | $P(OPh)_3$ | 1.4 | DMAP | 1.4 | 61 | 10,3 |
| A | 0,05 | 0,05 | - | - | $P(OPh)_3$ | 1.4 | DMAP | 1.4 | 105 | < 0,2 |

1) 4.4'-Bis(4-aminophenoxy)diphenylsulfon
2) Isophthalsäure
3) Benzoesäure
4) 1-Naphthoesäure
5) 2-Naphthoesäure
6) 4-Chlorbenzoesäure
7) Biphenyl-4-carbonsäure
8) 4.4'-Bis(4-aminophenoxy)diphenylsulfon-bisbenzoat
9) Triphenylphosphit
10) 4-Dimethylaminopyridin
11) Zinn(II)-Oxalat
12) Phenoxypyridin

## Ansprüche

1. Formmasse bestehend aus einem thermoplastisch verarbeitbaren, aromatischen Polyamid enthaltend die Reste nachstehender Ausgangsmonomeren:

A. HOOC - Ar - COOH

B. $H_2N$ - Ar′ - $NH_2$

C. R′ - COOH

hierbei bedeutet

Ar: 1.3- oder 1.4-Phenylen; 1.4-, 1.5-, 2.6- oder 2.7-Naphthylen,

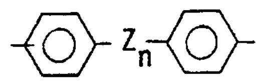

oder

Ar':

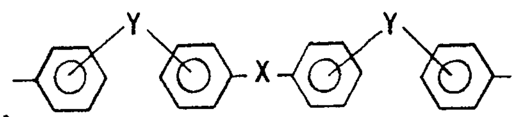 ;

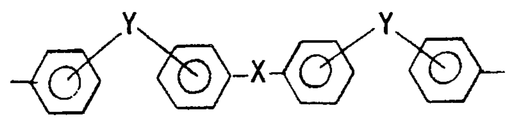 ;

X: $-SO_2-$; -CO-;

Y: -O-; -S-;

Z: -O-; -S-; $-SO_2-$; -CO-; $-CR_2-$;

R: -H; $C_1$ - $C_4$-Alkyl;

R' : 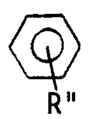 ; 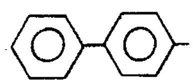 ; 1- bzw. 2-Naphthyl;

R″: -H; $C_1$ - $C_4$-Alkyl; Halogen;

n : 0; 1,

wobei die Komponente C. zu 0,01 bis 10 Mol.-% - bezogen auf die Summe der Komponenten A. und B. in dem Polyamid enthalten ist.

2. Formmasse gemäß Anspruch 1 mit der Bedeutung von

Ar: 1.3-Phenylen.

3. Formmasse gemäß Anspruch 1 und 2 mit der Bedeutung von

Ar': 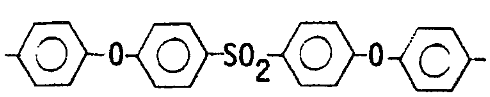

4. Formmasse gemäß den Ansprüchen 1 bis 3 mit der Bedeutung von

R' = 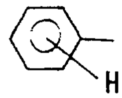

5. Formmasse gemäß den Ansprüchen 1 bis 4, in der die Komponente C. zu 0,5 bis 8 Mol.-% in dem Polyamid enthalten ist.